# FASCICULE DE BREVET EUROPEEN

(11) **EP 1 806 165 B1**
(45) Date de publication et mention de la délivrance du brevet: **09.07.2008**
(21) Numéro de dépôt: 07300703.1
(22) Date de dépôt: 04.01.2007
(51) Int. Cl.: A63C 5/07, B29C 65/34

(54) **Procédé de fabrication d'une planche de glisse présentant un élément rigide rapporté sur sa face supérieure**
Verfahren zur Herstellung eines Snowboards, dass ein starres Element auf seiner Oberfläche aufweist
Method of manufacturing a snowboard having a rigid element attached to its top surface

(30) Priorité: 04.01.2006 FR 0650029
(43) Date de publication de la demande: 11.07.2007
(73) Titulaire: Skis Rossignol, 38430 Moirans (FR)
(72) Inventeur: Zanco, Alain, 38260, Saint Hilaire de la Cote (FR); Christoud, Jacky, 38500, St. Cassien (FR)
(74) Mandataire: Palix, Stéphane

(56) Documents cités:
- WO-A-20/04003096
- BE-A- 637 072
- FR-A- 2 620 648
- FR-A- 2 854 333
- US-A- 4 029 837
- US-A- 5 056 807

## Description

### Domaine Technique

L'invention concerne le domaine des planches de glisse sur neige, et plus spécifiquement des planches de glisse intégrant des élément rigides, et en particulier des renforts de mécanisation, présents sur leur face supérieure.

Elle concerne plus particulièrement l'utilisation d'un complexe textile particulier utilisé pour assurer le collage de tels éléments rigides de renfort sur la structure de la planche. Elle vise plus précisément la composition de ce complexe, qui lui permet d'assurer le phénomène de collage par un ramollissement *in situ* des différents matériaux à l'interface de la zone de collage.

### Techniques antérieures

De façon générale, il peut être utile, pour améliorer les propriétés mécaniques d'un ski, ou plus généralement d'une planche de glisse, de lui adjoindre des éléments complémentaires jouant un rôle de raidisseurs, et venant modifier la capacité de déformation intrinsèque de la planche, notamment en flexion.

L'intégration de ces éléments raidisseurs directement dans la structure de la planche, peut donner lieu à des complexifications trop importantes du procédé de fabrication, voire même à des impossibilités dans certains cas de figure. En effet, l'intégration de renforts, directement lors du moulage, peut exagérément compliquer la forme du moule, ou imposer le positionnement des raidisseurs dans des zones qui ne sont pas forcément optimales.

C'est pourquoi les éléments rigides de renfort sont généralement solidarisés sur la face supérieure de la structure de la planche, comme cela est notamment décrit dans le document FR 2 854 333. Plus précisément, les éléments rigides de renfort sont fréquemment à base de matériaux composites, intégrant une résine d'un matériau polymérique. Ces renforts ou raidisseurs sont montés en divers endroits de la structure de la planche, qui présente une face supérieure également à base d'un matériau polymérique, et qui sert de couche de décor et de protection. Une technique pour la mise en place de ce type de raidisseurs consiste à opérer par collage. Ainsi, des colles du type polyuréthanne peuvent être utilisées, de manière à réagir avec les résines qui composent les couches extérieures de l'élément raidisseur et de la structure de support. Toutefois, l'emploi de ce type de colle présente certains inconvénients. En effet, les fonctions isocyanates réagissent chimiquement avec les résines de ces couches, et elles doivent donc être formulées pour éviter l'apparition de réactions parasites qui viendraient dégrader le reste de la structure ou du raidisseur. En outre et surtout, le collage nécessite une opération de dépôt de la colle qui est délicate dans la mesure où elle nécessite une précision de positionnement, et le travail dans une atmosphère exempte de poussière.

BE-A-637072 divulgue un procédé de collage par ramollissement de matériaux soumis au passage d'un courant électrique.

Un objectif de l'invention est de fournir un intermédiaire de collage qui permette un positionnement simple sur la planche lors de sa fabrication, sans imposer de conditions opératoires difficiles à maîtriser industriellement.

Un autre objectif de l'invention est de permettre la solidarisation d'éléments de renforts qui puissent être de formes extrêmement variées, et ce avec une homogénéité des propriétés de collage sur toute la surface de contact avec la structure de la planche.

### Exposé de l'invention

L'invention concerne donc un procédé pour la fabrication d'une planche de glisse, qui comporte de façon connue une structure présentant une face supérieure en un matériau polymérique, sur laquelle sont rapportés au moins un élément rigide en un matériau à base d'une résine polymère.

Conformément à l'invention, ce procédé se caractérise en ce que l'élément rigide est solidarisé à la structure par un complexe textile qui comporte une âme textile intégrant des fils conducteurs électriques. Cette âme textile est recouverte d'une couche extérieure, réalisée en un matériau qui est compatible avec le matériau de la structure de support. Le procédé comporte une étape pendant laquelle l'élément rigide est plaqué sous pression sur la structure tandis que les fils conducteurs sont soumis au passage d'un courant électrique provoquant un ramollissement des matériaux avoisinants, puis leur soudure.

Autrement dit, l'invention consiste donc à souder l'élément rigide sur la planche, en intégrant dans cet élément un complexe textile dont l'âme est conductrice électriquement, de manière à pouvoir être parcourue par un courant lorsque l'élément rigide est appliqué sur la structure de la planche. Le passage d'un courant électrique dans l'âme textile provoque par effet Joule la dissipation d'une chaleur, qui vient ramollir les matériaux à proximité, et notamment les couches extérieures de la structure de la planche et de l'élément rigide. De la sorte, les différentes matières, sous l'effet d'une pression, peuvent se mixer, dans un état proche de la fusion, pour ensuite former une seule couche homogène après refroidissement.

Ainsi, le collage ou la soudure est réalisé de manière très homogène, puisque l'intégralité de l'âme textile dissipe une quantité de chaleur. Du fait de la compatibilité chimique des couches qui viennent au contact l'une de l'autre, il n'y a donc pas de risque de voir apparaître des phénomènes chimiques susceptibles de dégrader ces différentes couches, voire de créer des zones de fragilité ou de délaminage.

En pratique, l'âme textile peut être réalisée de différentes manières, et notamment à base d'un tissu chaîne et trame, ou d'un non tissé.

Dans le cas d'un tissu chaîne et trame, les fils conducteurs peuvent être présents soit dans une seule direction du tissu, et typiquement le sens chaîne, correspondant généralement à l'axe longitudinal de la planche de glisse. Les fils conducteurs peuvent également être présents dans les deux directions du tissu, de manière à former un réseau maillé.

En fonction des applications, et notamment des dimensions des zones de collage, les fils conducteurs peuvent représenter tout ou partie des fils dans le sens chaîne et/ou trame. En d'autres termes, dans certains cas, l'intégralité des fils dans le sens chaîne est constituée par des fils conducteurs. Dans d'autres cas, les fils conducteurs sont répartis entre d'autres fils non conducteurs.

Avantageusement, en pratique, les fils conducteurs utilisés peuvent être à base de filaments de carbone, qui présentent une bonne capacité au tissage, tout en possédant une résistivité électrique permettant d'obtenir une élévation de température suffisante.

L'âme textile du complexe de collage est recouverte de la couche extérieure qui peut être obtenue de différentes manières. Ainsi, cette couche extérieure peut être réalisée par enduction de l'âme textile, qui est ensuite rapportée sous l'élément rigide.

La couche extérieure associée à l'âme textile peut être obtenue par contre-collage d'un ou plusieurs films sur l'âme textile.

En pratique, les éléments rigides peuvent être de type divers, dès lors qu'ils intègrent le textile facilitant sa soudure sur la structure de la planche. Il peut bien entendu s'agir d'éléments rigides de renforts, destinés à augmenter la raideur de la planche. Mais il peut aussi s'agir d'éléments fonctionnels, nécessitant une solidarisation ferme sur la planche. On peut par exemple citer des plateformes de réhaussement de la fixation, ou des embases individuelles de montage d'un des organes de la fixation, voire encore des points d'ancrage d'éléments d'amortissement ou de dynamisation..

### Description sommaire des dessins

La manière de réaliser l'invention, ainsi que les avantages qui en découlent, ressortiront bien de la description du mode de réalisation qui suit, à l'appui des figures annexées dans lesquelles :
- La figure 1 est une vue en perspective sommaire d'un ski avant mise en place de deux raidisseurs montrés avant collage;
- La figure 2 est une vue en coupe transversale partielle d'un ski incluant un renfort, dans la zone de collage du renfort sur la surface extérieure du ski ;
- la figure 3 est une vue en perspective sommaire du complexe conforme à l'invention, montré au moment de sa mise en place entre la structure de la planche et l'élément rigide ;
- les figures 4 et 5 sont des vues en coupe du complexe caractéristique montré entre la structure de la planche et l'élément raidisseur, respectivement avant et après l'opération de collage.

### Manière de réaliser l'invention

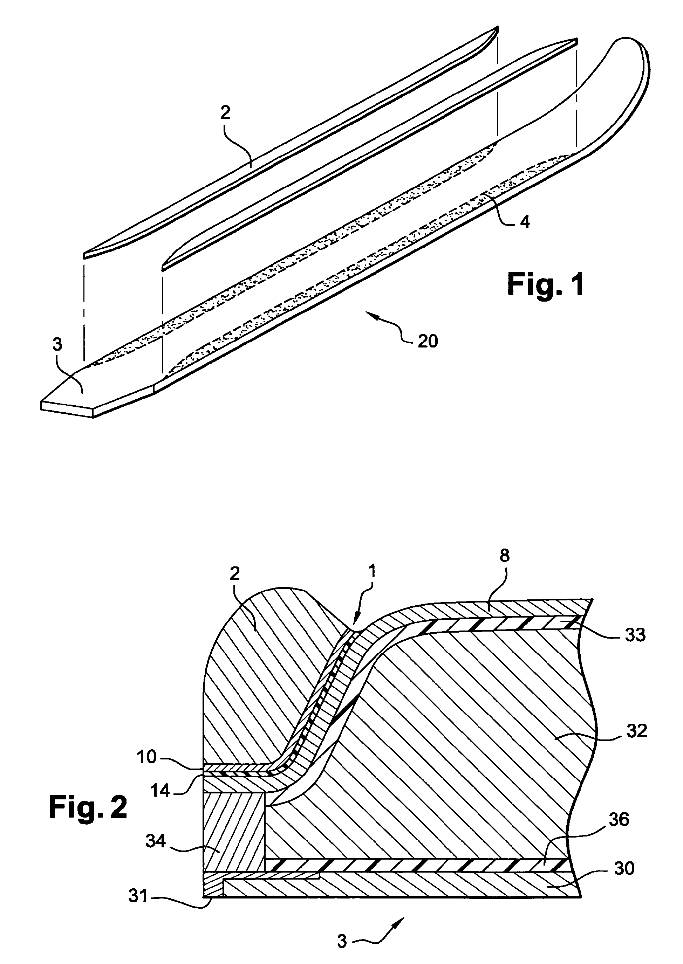

Comme déjà évoqué, l'invention concerne une planche de glisse particulière, équipée d'éléments rigides. L'exemple de réalisation est plus particulièrement décrit pour l'application de l'invention à la mise en place d'éléments rigides de renfort, sans toutefois y être limitée. L'invention peut s'appliquer à divers types de planches, et notamment des skis tels qu'illustrés à la figure 1. Ainsi, un tel ski (20) est principalement constitué d'une structure (3) sur laquelle sont rapportées, au niveau des lignes pointillées (4) deux éléments de renfort (2), par le procédé de collage caractéristique.

L'invention peut s'appliquer à des structures de planches extrêmement variées, tant au niveau de leur géométrie que de leur constitution. Ainsi, la planche peut être réalisée par un assemblage de différentes couches superposées, puis moulées, ou bien encore par un procédé d'injection d'une résine de polyuréthanne formant le noyau du ski. Il importe que la face supérieure (8) de la planche soit recouverte d'une couche dite de décor et de protection, réalisée à base de matériau polymérique, sur laquelle pourra agir le complexe intermédiaire de collage caractéristique. L'élément rigide de renfort (2) peut également être de formes extrêmement variées, déterminées en fonction de l'application et de la fonction qui lui est assignée. De même, l'emplacement de l'élément rigide de renfort sur le ski peut être extrêmement varié, également en fonction de l'influence que l'on souhaite lui donner. La nature du renfort peut également être variée, notamment en fonction des propriétés mécaniques que le renfort est censé conférer au ski.

Toutefois, il importe que la face inférieure de l'élément rigide de renfort (2) présente une couche à base d'un matériau polymérique fusible aux conditions combinées de pression appliquée lors de l'assemblage, et de température résultant de l'application du courant électrique dans le complexe caractéristique.

Concernant ce type d'architecture de planches, l'invention peut s'adapter indifféremment au ski dit "à chants", comportant des éléments de renforcement latéraux, mais également au ski à structure dit "coque", dans lequel les couches internes de renfort du ski se prolongent latéralement en descendant à proximité des carres.

Une structure hybride telle qu'illustrée à la figure 2 peut également tirer avantage de l'invention.

Ainsi, le ski illustré à la figure 2 possède une semelle (30) bordée latéralement des carres métalliques (31). Cette semelle supporte une couche fibreuse de renfort (36) bordée latéralement par un élément longitudinal (34) formant chant. La partie centrale de la structure (3) comprend un noyau (32) qui peut être réalisé de différentes manières, soit à partir d'un élément préalablement réalisé en bois ou en résine synthétique, ou bien encore réalisé *in situ* par injection de composants réagissant pour former une mousse de polyuréthanne.

Ce noyau est recouvert par exemple d'une couche fibreuse de renfort (33), et de toutes couches complémentaires de renfort, par exemple métallique, nécessaire pour obtenir les propriétés mécaniques souhaitées. La face extérieure de la structure (3) est recouverte d'une couche supérieure de décor de protection (8), à base de matériaux polymériques.

Dans sa zone latérale, la structure (3) reçoit l'élément rigide de renfort (2).

Cet élément de renfort (2) est solidarisé à la couche extérieure (8) de la structure (3) par sa couche extérieure (14), formant la couche extérieure d'un complexe textile intégré dans l'élément rigide.

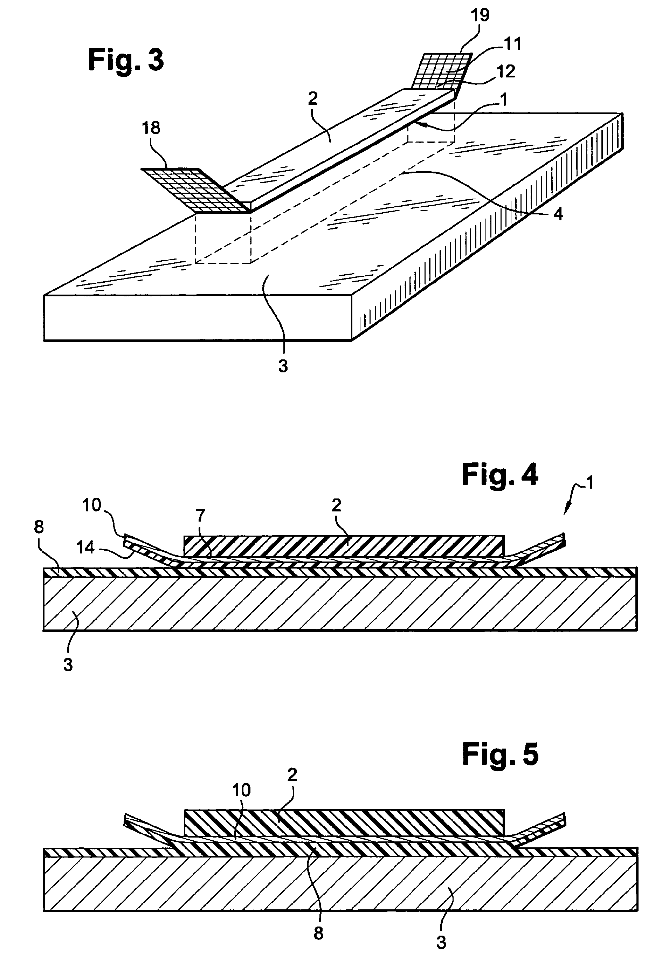

Comme illustré à la figure 3, l'élément rigide (2) est mis en place sur la face supérieure du ski, à l'intérieur de la zone (4) illustrée en pointillés, au niveau de laquelle il devra être soudé.

L'intermédiaire de collage caractéristique (1) comporte une âme textile (10) qui est réalisée à base de fils possédant une conductivité électrique. Parmi les matériaux donnant de bons résultats figurent les tissus à base de fils de carbone. Ces fils de carbone peuvent être présents en chaîne (11) et/ou en trame (12) du tissu. Les fils de carbone peuvent être utilisés seuls ou en combinaison avec d'autres fils non conducteurs, permettant de régler la capacité d'échauffement de l'intermédiaire de collage, et réduire son coût de fabrication.

Typiquement, on a obtenu de bons résultats en utilisant des textiles tissés à base de fils de carbone de 12 000 filaments tissés de manière jointive au moyen d'une trame fine. Un tel textile présente une résistance de l'ordre de quelques dizaines d'Ohms entre deux points éloignés de 20 cm dans le sens chaîne des fils de carbone.

Toutefois, d'autres filaments conducteurs, notamment métalliques, peuvent être utilisés. De même, une étoffe non tissée réalisée à base de filaments conducteurs en quantité suffisante peut être employée.

Conformément à l'invention, cette âme textile (10) est recouverte, sur sa face extérieure, d'une couche (14) en un ou plusieurs matériaux polymériques. Ces matériaux sont compatibles avec les matériaux de la pièce au contact de laquelle elle est destinée à venir.

Ainsi, dans le cas d'un élément raidisseur (2) à base de fibres de verre, il peut être avantageux que l'âme textile (10) soit recouverte d'une couche (13) de polyamide. De multiples combinaisons de matériaux peuvent être possibles en fonction de la composition des éléments à solidariser.

Comme déjà évoqué, la couche externe (14) du complexe caractéristique peut être obtenue soit par enduction soit par contre-collage des films.

Lors de l'utilisation du complexe caractéristique (1), tel qu'illustré à la figure 3, la couche externe inférieure (14) du complexe (1) vient au contact de la face supérieure (8) de la structure de support (3). Le complexe (1) a été préalablement intégré dans l'élément raidisseur (2), et plus précisément sous sa face inférieure. Ce complexe peut ainsi avoir été intégré lors d'une opération de moulage par thermo-compression qui a permis de réaliser le renfort (1).

L'ensemble est disposé sous une presse, destinée à appliquer une pression constante et uniforme sur l'intégralité de la zone où aura lieu le collage. Dans la mesure où le renfort et/ou la face supérieure du ski ne sont pas plans, la presse peut incorporer des cales de géométrie complémentaire aux pièces à presser, pour assurer une pression de serrage homogène et uniforme. Il est également possible d'utiliser une presse incluant un boudin pneumatique qui épouse la forme non plane de l'ensemble formé par le renfort et la structure de la planche, pour y appliquer une pression constante.

Les portions débordantes (18,19) du complexe servent d'électrodes, et peuvent recevoir la connexion à une source de tension ou un générateur de courant. Le courant électrique traversant l'âme textile (10) provoque un échauffement par effet Joule. Cet échauffement combiné à la pression, provoque le ramollissement, voire la légère fusion de la couche externe (14) du complexe (6) et de la face correspondante (8) de la planche, de telle sorte qu'après refroidissement, l'interface entre les couches a quasiment disparu, comme illustré à la figure 5. La durée de conduction électrique est déterminée en fonction des températures à atteindre, elles-mêmes dépendantes des épaisseurs et des matériaux employés. On obtient ainsi un assemblage par thermofusion.

Typiquement, avec un textile tissé à base de fils de carbone de 12 000 filaments, revêtu d' un polyamide, une conduction de quelques secondes permet de monter jusqu'à une température de l'ordre de 160°C, suffisante pour assurer l'homogénéisation des polymères à l'interface de l'élément raidisseur et de la structure.

Il ressort de ce qui précède que le complexe conforme à l'invention permet d'assurer un collage propre, efficace, homogène, et reproductible, sans nécessiter d'opération de manipulation délicate, donc en définitive un collage véritablement industriel.

## Revendications

1. Procédé de fabrication d'une planche de glisse, comportant une structure (3) présentant une face supérieure (8) en un matériau polymérique, sur laquelle est rapporté au moins un élément rigide (2) en un matériau à base d'une résine polymère, comportant une étape pendant laquelle l'élément rigide (2) est disposé sur la face supérieure de la structure, **caractérisé en ce que** ledit élément rigide inclut sur sa face inférieure un complexe textile (1) comportant une âme textile (10) intégrant des fils conducteurs électriques (11,12), et une couche extérieure (14) en un matériau compatible avec le matériau polymérique de la face supérieure (8) de la structure (3), et **en ce qu'**il comporte une étape pendant laquelle l'élément rigide est plaqué sous pression sur la structure tandis que lesdits fils conducteurs sont soumis au passage d'un courant électrique provoquant un ramollissement des matériaux avoisinants, puis leur soudure.

2. Procédé selon la revendication 1, ***caractérisée* en ce que** l'âme textile (10) du complexe (1) est réalisée à partir d'un tissu chaîne et trame.

3. Procédé selon la revendication 2, ***caractérisée* en ce que** le tissu possède des fils conducteurs, au moins dans le sens chaîne.

4. Procédé selon la revendication 1, ***caractérisée* en ce que** l'âme textile du complexe est réalisée à partir d'un non tissé.

5. Procédé selon la revendication 1, ***caractérisée* en ce que** les fils conducteurs sont à base de filaments de carbone.

6. Procédé selon la revendication 1, ***caractérisée* en ce que** les éléments renforts sont disposés sur les deux cotés de la planche.

7. Procédé selon la revendication 1, **caractérisée en ce que** l'élément rigide est un élément de renfort.

8. Procédé selon la revendication 1, **caractérisée en ce que** l'élément rigide est un élément de montage d'un organe de la fixation.

## Claims

1. Method for manufacturing a snowboard, comprising a structure (3) having an upper surface (8) made from a polymer material, to which is attached at least one rigid element (2) from a material based on a polymer resin, comprising a step in which the rigid element (2) is placed on the upper surface of the structure, **characterized in that** the said rigid element includes on its underside a textile complex (1) comprising a textile core (10) incorporating electrically conducting wires (11,12), and an outer layer (14) from a material compatible with the polymer material of the upper surface (8) of the structure (3), and **in that** it comprises a step in which the rigid element is applied under pressure to the structure while the said conducting wires are subjected to the passage of an electric current causing a softening of the surrounding materials, followed by their welding

2. Method according to Claim 1, ***characterized* in that** the textile core (10) of the complex (1) is made from a warp and weft fabric.

3. Method according to Claim 2, ***characterized* in that** the fabric has conducting wires, at least in the weft direction.

4. Method according to Claim 1, ***characterized* in that** the textile core of the complex is made from a non-woven fabric.

5. Method according to Claim 1, ***characterized* in that** the conducting wires are based on carbon filaments.

6. Method according to Claim 1, ***characterized* in that** the reinforcing elements are placed on both sides of the snowboard.

7. Method according to Claim 1, ***characterized* in that** the rigid element is a reinforcing element.

8. Method according to Claim 1, ***characterized* in that** the rigid element is an element for mounting a binding member.

## Patentansprüche

1. Verfahren zur Herstellung eines Gleitbretts, umfassend eine Struktur (3) mit einer Oberseite (8) aus einem Polymer-Material bzw. einem polymerartigem Material, auf der mindestens ein starres Element (2) aus einem Material auf Polymerharzbasis angebracht ist, umfassend einen Schritt, in dem das starre Element (2) auf der Oberseite der Struktur angeordnet wird, **dadurch gekennzeichnet, dass** das starre Element auf seiner Unterseite einen textilen Komplex (1), der einen textilen Kern (10) umfasst, in den elektrisch leitende Fäden (11, 12) integriert sind, und eine Außenschicht (14) aus einem Material einschließt, das mit dem Polymer der Oberseite (8) der Struktur (3) kompatibel ist, und dass es einen Schritt umfasst, in dem das starre Element unter Druck an die Struktur angelegt wird, während die leitenden Fäden dem Durchgang eines elektrischen Stroms ausgesetzt werden, der eine Erweichung der benachbarten Werkstoffe und dann ihre Verschweißung bewirkt.

2. Verfahren nach Anspruch 1, **dadurch gekennzeichnet, dass** der textile Kern (10) des Komplexes (1) aus einem Kett- und Schussgewebe hergestellt ist.

3. Verfahren nach Anspruch 2, **dadurch gekennzeichnet, dass** das Gewebe mindestens in Kettrichtung leitende Fäden besitzt.

4. Verfahren nach Anspruch 1, **dadurch gekennzeichnet, dass** der Textilkern des Komplexes aus einem Vlies hergestellt ist.

5. Verfahren nach Anspruch 1, **dadurch gekennzeichnet, dass** die leitenden Fäden auf der Basis von Kohlenstofffilamenten sind.

6. Verfahren nach Anspruch 1, **dadurch gekennzeichnet, dass** die Verstärkungselemente auf den beiden Seiten des Bretts angeordnet sind.

7. Verfahren nach Anspruch 1, **dadurch gekennzeichnet, dass** das starre Element ein Verstärkungselement ist.

8. Verfahren nach Anspruch 1, **dadurch gekennzeichnet, dass** das starre Element ein Element zur Montage eines Organs der Bindung ist.
